# EUROPEAN PATENT APPLICATION

(11) **EP 3 336 454 A1**
(43) Date of publication of application: **20.06.2018**
(21) Application number: 16204998.5
(22) Date of filing: 19.12.2016
(51) Int. Cl.: F25D 3/02, F25D 31/00, A23G 9/04

(54) **A BEVERAGE COOLER**

(71) Applicant: BSH Hausgeräte GmbH, 81739 München (DE)
(72) Inventor: Nissen, Cornelius, 81545 München (DE)

(57) **Abstract**

A beverage cooler (10) comprising at least a cooling module (11) and an upper portion (12) detachably connectable to each other, wherein the cooling module (11) comprises integral cooling means (13) which are adapted to being activated by refrigerating means.

The present invention enables the use of the ice maker appliance for kitchen machines as a cooling module of the beverage cooler. The beverage cooler is easy to use and ready to use at any time without additional operations like providing cooling means.

## Description

### FIELD OF THE INVENTION

The present invention relates to a beverage cooler comprising at least a cooling module and an upper portion which are detachably connected to each other.

### STATE OF THE ART

Many liquids e.g. wine, champagne, beer, juices and other beverages are preferably served cold. The traditional bottle coolers for keeping the beverages chilled and ready for being served uses the additional refrigerant e.g. ice for activating and maintain the cooling process.

US 1999670 A discloses a bottle cooler comprising inner and outer telescoping jackets, the inner jacket being an annular, hopper-shaped refrigerant container and the outer jacket being heat insulated, an inner jacket closure and an outer jacket closure adapted to snugly embrace the neck of a bottle.

US 4393665 A discloses a server for chilled wine and similar beverages or foods includes a generally cylindrically-shaped side wall into which a bottle or other container may be placed. The side wall is constructed of a heat conductive material such as aluminum, copper, alloys thereof, etc., of sufficient thickness to conduct heat as needed in its long direction. The cooler also includes an ice receptacle which holds the ice either in contact with the side wall or an extension or appendage thereof. The side wall acts to present the wine container with a surface which is at or below the temperature of the wine. This substantially eliminates the transfer of heat by radiation to the wine container. The server also minimizes conductive and/or convective heat transfer between the wine bottle and the surroundings. The side wall of the server surrounds at least about one-half of the height of the enlarged part of the bottle being cooled.

According to the presented solutions the user needs to use refrigerant to obtain the cooling effect like in every traditional bottle coolers. Moreover, the bottle after cooling in traditional cooler is always wet what is not desirable during service of the cooled liquid.

### THE AIM OF THE INVENTION

It is the object of the present invention to provide a convenient beverage cooler.

### SUMMARY OF THE INVENTION

This object is solved by a beverage cooler comprising a cooling module with an integral cooling mean which is activated by refrigerating means and an upper portion being detachably connected with the cooling module.
The cooling module is a double walled container. Between sealed walls of the cooling module there is the cooling mean which activation provides a cooling effect. Walls of the cooling module are sealed what means that the cooling mean is enclosed between the walls and the cooling mean is not available for users. The cooling mean can be for instance an ice or other liquid which features allow to use it as a cooling mean. The cooling mean is activated by refrigerating means so in other words to make the beverage cooler ready to use the cooling module has to be inserted into refrigerator for few hours before use. The time needed for preparing the cooling module to use depends on the type of the cooling mean. The cooling mean serves to maintain the beverage low temperature by conduction of the cold from a base and walls of the cooling module to the cooling beverage. The cooling module and the upper portion are detachably connected to each other by techniques well known in the state of the art.

It is to be understood that both the foregoing general description and the following detailed description are exemplary, and are intended to provide further explanation of the invention as claimed. Other advantages and features of the invention will be apparent from the following description, drawings and claims.

Therefore a simple, efficient and inexpensive cooling device ready to use immediately and at any time is provided.

Moreover, the cooling effect of the beverage can be obtained by using existing cooling modules e.g. ice cream maker attachment and the cooling effect last longer in comparison to traditional coolers.
Additionally, the time required for cooling the beverage is reduced.
What's more, the dryness of the bottle during the cooling process is provided what makes the pouring of the cooled beverage easier.

### PREFERED EMBODIMENT OF THE INVENTION

According to one embodiment of the invention the beverage cooler contains the cooling module which is an ice maker appliance for kitchen machines. The positive effect of using an ice maker appliance for kitchen machines as a part of the beverage cooler makes it more useful for customers. Ice cream maker appliance is then used not only accordingly to its main purpose but also as a beverage cooler. That's why it is more attractive to the customers who are allowed to use it for different purposes. Additionally, it saves space in the kitchen.

In the preferred embodiment the cooling module is connected to the upper portion by means of fastening interface. The upper portion is provided to hold the cooled bottle in the vertical position. The upper portion is connected to the cooling module by means of fastening interface what means that the connection is realized by standard screw or bayonet connection or simply press fit connection.

In another embodiment of the invention the upper portion is ring shaped with the inner opening adapted to firmly hold a bottle. The upper portion is ring shaped element with the diameter of the upper edge adjusted to hold the bottle in the upright position. Additionally, the upper portion is a two component element with an elastic lip placed on the inner opening. This means that the upper portion and the elastic lip is one element where the upper portion is made out of plastic and the elastic lip is made out of elastic material like silicon, rubber or plastic. Such two component element is possible to be produced in cost-effective injection moulding technology. The functions of the elastic lip are to hold the body of the cooled bottle in the upright position and to prevent cooled air to go outside the beverage cooler to provide cooling more effective.

In a favourable embodiment of the invention a kitchen machine comprises at least a drive unit, a coupling for the tools, a working bowl and a beverage cooler according to preferred embodiments of the invention.

The present invention enables the use of the ice maker appliance for kitchen machines as a cooling module of the beverage cooler. The beverage cooler is easy to use and ready to use at any time without additional operations like providing cooling means.

### BRIEF DESCRIPTION OF THE FIGURES

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
- Fig. 1: exemplary shows a kitchen machine with a standard bowl;
- Fig. 2: shows a half-section view of a cooling module - an ice cream maker appliance;
- Fig. 3: shows a beverage cooler according to the present invention;

### DETAIL DESCRIPTION OF THE INVENTION

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

The standard kitchen machines comprises at least a driving unit for driving working tools, a coupling for the tools and a working bowl for processing food. A lot of existing kitchen machines is provided with many additional attachments for different purposes e.g. cutting vegetables, preparing pasta, grinding seeds, preparing ice creams and so on.

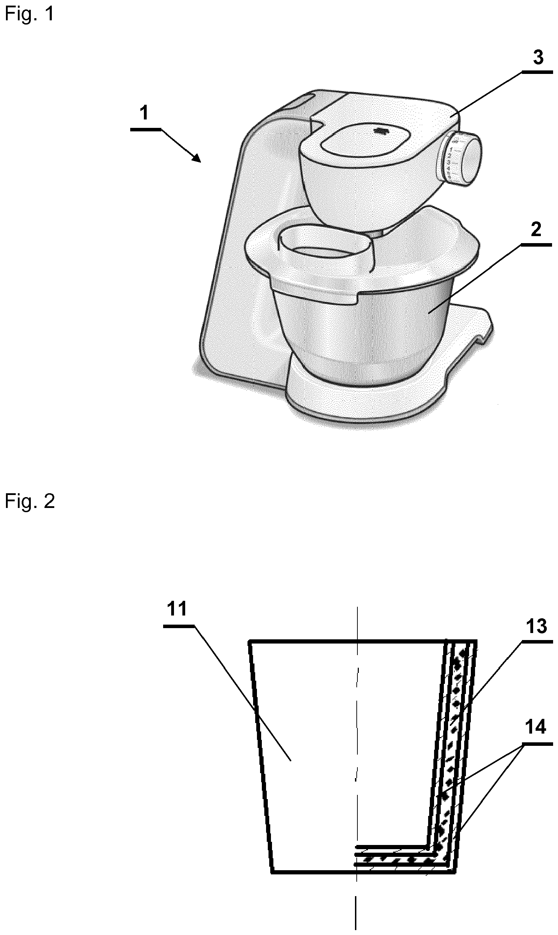

Fig. 1 shows a kitchen machine 1 with a standard bowl 2 next to the motor (not shown on the fig.). The kitchen machine 1 is provided with a driving unit (not shown on the fig.), a pivotable arm 3 which extends to above the bowl 2 for receiving food to be processed.. The pivotable arm 3 is equipped with a working tool (not shown on the fig.). When the pivotable arm 3 of the kitchen machine 1 is lifted up it is possible to put the bowl 2 on the kitchen base (not shown on the fig.). In such position of the pivotable arm 3 the driving unit is not possible to start. When the pivotable arm 3 is pulled down the power is transmitted from the driving unit to the working tool and the kitchen machine 1 is ready to be switched on and start working. The kitchen machine 1 is a device which can be used with the standard bowl 2 as seen on Fig. 1 or with different attachments e.g. ice maker attachment (not shown on the fig.).

Fig. 2 shows a cooling module 11 which could be an attachment for the kitchen machine 1 for making ice creams. The cooling module 11 is the double wall container 14 with the cooling mean 13 sealed between the walls 14. The cooling mean 13 can be for instance an ice or other liquid which features allow to use it for cooling purpose. The cooling mean 13 is not available for users. The cooling mean 13 is activated by a refrigerator. It is a standard ice cream maker. The shape of the cooling module 11 is designed in such a way not to take too much space in the refrigerator but it is large enough to accommodate a standard bottle with a beverage like wine, champagne, beer, juice or the like. The inner wall 14 of the cooling module 11 is cup-shaped, adapted to easy stir the ingredients for ice cream and also for accommodating the bottle.

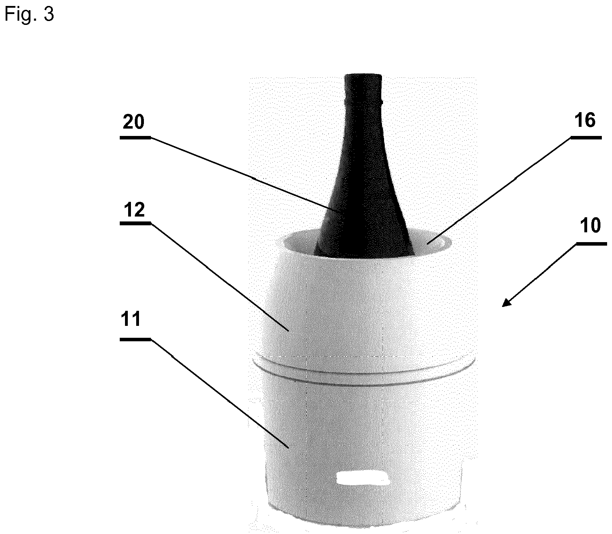

Fig. 3 shows a beverage cooler 10 according to the present invention. The beverage cooler 10 comprises the cooling module 11 at the bottom and the ring shaped upper portion 12 on the top. The upper portion 12 has an elastic lip 17 (not shown on the figure) placed on the inner side of the upper portion 12. The elastic lip 17 is collar shaped and extend from the inner side of the upper portion 12 of the beverage cooler to the central axis of the beverage cooler 10 to hold the cooled bottle during the cooling process and prevent cooled air to go outside the beverage cooler 10. The cooling module 11 and the upper portion 12 are connected together by screwing means.

The present invention enables the use of the ice maker appliance for kitchen machines as a cooling module of the beverage cooler. The beverage cooler is easy to use and ready to use at any time without additional operations like providing cooling means.

### LIST OF REFERENCE SIGNS

- 1: kitchen machine
- 2: bowl
- 3: pivotable arm

- 10: beverage cooler
- 11: cooling module
- 12: upper portion
- 13: cooling mean
- 14: wall
- 15: fastening interface
- 16: inner opening
- 17: elastic lip

- 20: bottle

## Claims

1. A beverage cooler (10) comprising at least a cooling module (11) and an upper portion (12) detachably connectable to each other **characterized in that** the cooling module (11) comprises integral cooling means (13) which are adapted to being activated by refrigerating means.

2. The beverage cooler (10) according to claim 1 **characterized in that** the cooling module (11) is an ice maker appliance for kitchen machines (1).

3. The beverage cooler (10) according to claim 2 **characterized in that** the cooling module (11) is connected to the upper portion (12) by means of fastening interface (15).

4. The beverage cooler (10) according to claim 3 **characterized in that** the fastening interface (15) is realized by a screwing, bayonet, press fit connection or the like.

5. The beverage cooler (10) according to any of preceding claims **characterized in that** the upper portion (12) is ring shaped element with the inner opening (16) adapted to firmly hold a bottle (20).

6. The beverage cooler (10) according to claim 5 **characterized in that** the upper portion (12) is a two component element with an elastic lip (17) on the inner opening (16) provided to firmly hold the body of the bottle (20).

7. The beverage cooler (10) according to claim 6 **characterized in that** the elastic lip (17) is made out of elastic material like silicon, rubber, plastic or the like.

8. A kitchen machine (1) comprising at least a drive unit, a coupling for the tools, a working bowl (2) and a beverage cooler (10) according to claim 1 to 7.
